# EUROPEAN PATENT APPLICATION

(11) **EP 4 424 276 A1**
(43) Date of publication of application: **04.09.2024**
(21) Application number: 22886682.8
(22) Date of filing: 11.10.2022
(51) Int. Cl.: A61C 13/01, A61C 13/08

(54) **MILL BLANK FOR DENTURES, CUT MEMBER FOR FRONT TOOTH, AND PRODUCTION METHOD FOR DENTURES**

(30) Priority: 26.10.2021 JP 2021174368
(71) Applicant: Tokuyama Dental Corporation, Tokyo 110-0016 (JP)
(72) Inventor: TOYODA Mana, Tokyo 110-0016 (JP); YAMAZAKI Tatsuya, Tokyo 110-0016 (JP); KINOSHITA Masaki, Tokyo 110-0016 (JP)
(74) Representative: Dr. Schön, Neymeyr & Partner Patentanwälte mbB
(86) International application number: PCT/JP2022/037901
(87) International publication number: WO 2023/074353

(57) **Abstract**

Provided is a mill blank for dentures that makes it possible to simply and efficiently produce highly aesthetic dentures without sacrificing congruence using a CAD/CAM system to replicate "highly congruent dentures that have a repair mark" that are obtained by making adjustments to dentures produced using standard dentures. According to the present invention, a mill blank for dentures is produced by fixing artificial tooth parts that comprise an artificial tooth material and fixing parts of the artificial tooth parts to a denture plate cutting part that comprises a denture plate material. The artificial tooth parts for molars have standard molar shapes and do not require cutting. The artificial tooth parts for front teeth are thicker than standard front teeth but substantially the same width as standard front teeth. The artificial tooth parts for the molars and the artificial tooth parts for the front teeth are arranged in a standard pattern for the corresponding teeth such that the fixing parts are not exposed at the surface during cutting.

## Description

### {Technical Field}

The present invention relates to a mill blank for dentures, a cut member for front teeth used in the mill blank for dentures, and a production method for dentures.

### {Background Art}

With the recent rapid aging, a demand for a denture has been increasing. Here, the denture (plate denture) means a removable prosthesis that, in the case where natural teeth and surrounding tissues such as gums or alveolar bones are lost, helps to recover an oral cavity's function such as mastication and also prevents a facial shape change and a trouble caused by the missing of the teeth and the loss of the surrounding tissues. In the denture, members making up for the missing (natural) teeth are artificial teeth and a member making up for the lost surrounding tissues is a denture plate. In this denture plate, a surface that comes into close contact with an alveolar ridge mucosa (surface that is not polished in denture production in view of congruence) is generally called a "mucosal surface", the opposite surface (surface polished in the denture production) that may come into contact with a buccal mucosa and a tongue is generally called a "polished surface", and a border part therebeween is called a "denture border". Further, a border part between a gum-corresponding part of the denture plate and the artificial tooth is called a "cervical part", and a wing-shaped part whose root is the cervical part and whose tip is the denture border is called a "denture flange". Further, in the denture plate, a part in which the artificial tooth is fixed is called an "alveolar part".

Typically, dentures are produced while they are delicately adjusted one by one by manual work according to the oral cavity's shape of a patient, and as a technique to produce a denture with less labor of the aforesaid manual work, a technique using a standard denture is also known (see Patent Literatures 1 to 3). Here, the standard denture is a ready-made denture-shaped member used to facilitate denture production and is composed of a standard denture plate and artificial teeth fixedly held thereon. The standard denture is formed such that, when it is put in the oral cavity of an individual patient (wearer) or its model, space is formed between the mucosal surface of the standard denture plate and the oral mucosa of the individual patient (the space will be hereinafter referred to also as "standard denture non-congruent space), and by filling the aforesaid space with a curable denture plate material such as a lining material (a cured body filling the space is sometimes called an "adjusting member"), it is possible to produce a denture that fits the individual patient. Note that a ready-made one mentioned here means that it is in the state of being available as a member product, and typically, it does not require many variations in teeth arrangement and so on and is prepared only in different relative dimensions (sizes) in many cases. Further, a standard denture for complete dentures (full dentures) where the row of all the teeth is fixed is often used.

A method to efficiently produce a denture highly fittable to an individual patient using a standard denture is also known. For example, as such a method, Patent Literature 4 describes a method for manufacturing a denture having the aforesaid adjusting member, which is "a method for manufacturing a denture, comprising: (A) a reference denture preparation step of preparing a reference denture serving as a reference denture member including a reference denture base member and artificial teeth; (B) a reference denture determination step of determining a shape of a reference denture to be used by, so as to place the reference denture at an appropriate position on an imaginary occlusal plane assumed as an occlusal plane arranged at a position at which the occlusal plane is medically supposed to be present in an oral cavity of a patient, (1) inserting the reference denture into the oral cavity of the patient or (2) inserting the reference denture into an articulator having a patient oral cavity model attached thereto, to thereby check a contact state between a mucosa in the oral cavity of the patient and the reference denture or to thereby check a contact state between the patient oral cavity model and the reference denture, and selecting, in a case of an inappropriate contact in use, a reference denture having another shape that is prevented from causing the inappropriate contact or finely adjusting a shape of the reference denture base member in the reference denture so as to prevent the contact; (C) a building and transfer step of building a curable denture base material in an uncured state for forming the adjusting member, on a mucosal surface of the reference denture base member in the reference denture determined to be used in the reference denture determination step, then placing the reference denture having the curable denture base material built thereon, at an appropriate position on the imaginary occlusal plane in the oral cavity of the patient or the articulator, transferring a mucosal shape of the oral cavity of the patient or a shape of the patient oral cavity model onto the curable denture base material, and forming a margin to remove the excess curable denture base material; and (D) a curing step of curing the curable denture base material that has undergone the building and transfer step, wherein (C) the building and transfer step includes (C1) a central building and transfer step of building the curable denture base material in an uncured state in a base central region of the reference denture base member, and transferring the shape of the oral cavity of the patient or the patient oral cavity model, (C2) an anterior building and transfer step of building the curable denture base material in an uncured state in the base anterior region of the reference denture base member, and transferring the shape of the oral cavity of the patient or the patient oral cavity model and extending the curable denture base material from a denture border to form a margin, and (C3) a posterior building and transfer step of building the curable denture base material in an uncured state in the base posterior region of the reference denture base member, and transferring the shape of the oral cavity of the patient or the patient oral cavity model and extending the curable denture base material from a denture border to form a margin, and wherein, after the central building and transfer step is performed, the anterior building and transfer step and the posterior building and transfer step are performed simultaneously or individually".

### {Citation List}

### {Patent Literature}

| | |
|---|---|
| {PTL 1} | JP 3449733 |
| {PTL 2} | JP 6294706 |
| {PTL 3} | WO 2018/207867 |
| {PTL 4} | WO 2020/195623 |
| {PTL 5} | US 2010/0086899A1 |
| {PTL 6} | JP 2014-534880A |
| {PTL 7} | JP 2018-507069A |

### {Summary of Invention}

### {Technical Problem}

The techniques using the standard denture are capable of easily making it congruent with the oral cavity shape of the patient only by building the lining material on the standard denture plate, and thus achieves a reduction in the denture production time and is very useful, but to make the denture really easy to use, the produced denture requires fine adjustment.

Specifically, for a patient having a trouble in the maxillo-mandibular positional relation or mastication because of the continued edentulous jaw state or the continued use of an unfit denture, in order to return the maxillo-mandibular occlusion or mastication to the normal state, it is necessary to repeat fine adjustments while the patient uses it as treatment, and finally make it highly congruent with the stable state after the treatment.

Further, artificial teeth of the standard denture are arranged and fixed to form a standard row of the teeth, and therefore, in the case where a denture congruent with a patient having malocclusion (hereinafter, referred to also as a "former malocclusion patient") such as maxillary protrusion (what is called buckteeth) or mandibular protrusion (reversed occlusion or what is called underbite) is to be produced, it is necessary to adjust the arrangement of the artificial teeth while the patient uses the denture once produced.

However, the highly congruent denture produced in this manner is not always aesthetically satisfactory because in its production process, the bonding of the lining material to the standard denture plate, its cutting, the cutting of the artificial teeth, and so on are repeated for the purpose of the aforesaid fine adjustment and the adjustment of the artificial teeth arrangement, and thus repair marks reflecting the history of these adjustments are left. Further, since the bonded part is easily colored or bacteria easily grow thereon, it is preferable to produce a denture without any repair marks by replication. It may be possible to obtain a highly aesthetic denture if a denture is produced by replication (re-produced) based on the final form of a highly congruent denture for whose production a lot of labor and time were taken as in the above-described manner, but such replication is not necessarily easy. For example, such replication takes a lot of labor and time because it typically requires a step of mounting a denture in an articulator to fabricate a wax denture, a step of forming a plaster mold from the wax denture, filling a denture plate material in the plaster mold to polymerize it, a step of taking out the resultant material from the plaster and polishing it, and a step of adjusting the occlusion of artificial teeth. Another problem is that, in the polymerization step, the deformation of the denture plate material accompanying its contraction makes it difficult to reproduce a completely matching shape.

Therefore, it is an object of the present invention to provide a method capable of performing the aforesaid replication easily and efficiently, and further to provide a mill blank for dentures, a cut member for front teeth, and a production method for dentures that enable the easy and efficient production of a highly aesthetic denture that has high congruence similarly to the "highly congruent denture" produced using a standard denture and obtained through the aforesaid adjustments, and that has no repair marks reflecting the adjustment history.

### {Solution to Problem}

The present invention solves the aforesaid problems, and a first aspect of the present invention is a mill blank for dentures including: a denture plate cutting part made of a denture plate material; cut members for front teeth each having a structure in which an artificial teeth cutting part made of an artificial tooth material and a fixing part for fixing the artificial teeth cutting part to the denture plate cutting part are connected; and molar members each having a structure in which an exposed part made of an artificial tooth material, having a standard molar shape, and requiring substantially no cutting and a fixing part for fixing the exposed part to the denture plate cutting part are connected, the cut members for front teeth and the molar members being fixed to the denture plate cutting part while arranged to form standard arrangement patterns of respective corresponding teeth,
wherein the artificial teeth cutting parts in the cut members for front teeth each have a shape such that a thickness defined as a distance between a labial surface and a lingual surface of the artificial teeth cutting part is larger than a thickness of a corresponding standard front tooth, and a width defined as a distance between a mesial surface and a distal surface of the artificial teeth cutting part is substantially equal to a width of the standard front tooth, and wherein the fixing parts in the cut members for front teeth are each connected to the cut member for front teeth so as not to be exposed to a surface when the artificial teeth cutting part in the cut member for front teeth and the denture plate cutting part are cut.

Preferably, the mill blank for dentures of the above aspect (hereinafter, also referred to as the "mill blank for dentures of the present invention") is a mill blank for maxillary or mandibular dentures in which the cut members for front teeth respectively corresponding to left and right central incisors, lateral incisors, and cuspids and the molar members respectively corresponding to left and right first premolars, second premolars, first molars, and second molars are fixed to the denture plate cutting part while arranged to form a standard arrangement pattern of maxillary or mandibular teeth.

Further, preferably, in the denture plate cutting part, areas of cervical parts in alveolar parts in which the molar members are fixed require substantially no cutting, and in the denture plate cutting part, interdental papillae are formed in alveolar parts in which the cut members for front teeth are fixed.

Further, preferably, in the mill blank for dentures of the present invention, the denture plate cutting part has a substantial disk shape having a recessed part or a lacking part for cutting amount reduction.

A second aspect of the present invention is a cut member for front teeth for a mill blank for dentures having a denture plate cutting part made of a denture plate material (hereinafter, also referred to as the " cut member for front teeth of the present invention"), the cut member for front teeth having a structure in which an artificial teeth cutting part made of an artificial tooth material and a fixing part for fixing the artificial teeth cutting part to the denture plate cutting part are connected, wherein, in the cut member for front teeth, the artificial teeth cutting part satisfies the following condition 1, and the fixing part satisfies the following condition 2:
[Condition 1]
   when it is defined that, in a denture artificial tooth having a standard shape of a front tooth corresponding to the cut member for front teeth, an exposed part not covered with a gum is a virtual artificial teeth cutting part, a part covered with the gum is a virtual fixing part, a labial surface side is a front side, a lingual surface side is a rear side, a direction perpendicular to a front-rear direction and passing through a mesial surface and a distal surface is a lateral direction, and a direction perpendicular to the front-rear direction and the lateral direction is a vertical direction,
   a shape of the artificial teeth cutting part as represented using a coordinate system whose x-axis is a direction parallel to a part corresponding to an incisal edge in the virtual artificial teeth cutting part, whose y-axis is a front-rear direction perpendicular to the x-axis, and whose z-axis is a vertical direction perpendicular to the x-axis and the y-axis is identical or substantially identical with a shape of a first trajectory that the virtual artificial teeth cutting part makes when the denture artificial tooth is arranged with an incisal edge center part thereof coinciding with an origin and is rotated around the x-axis being a rotation axis by a predetermined angle within a range of 5 to 25° in the front direction and by a predetermined angle within a range of 5 to 25° in the rear direction, or identical or substantially identical with a shape of a second trajectory that is made when the first trajectory is further moved forward and rearward by a predetermined length within a range of 2 mm or less; and
[Condition 2]
   when it is defined that, in the first trajectory or the second trajectory, an area where an area occupied by the virtual fixing part in a state where the denture artificial tooth is at a foremost position and an area occupied by the virtual fixing part in a state where the denture artificial tooth is at a rearmost position overlap with each other is a virtual fixing part overlap area, and an area where an area occupied by the virtual artificial teeth cutting part in the state where the denture artificial tooth is at the foremost position and an area occupied by the virtual artificial teeth cutting part in the state where the denture artificial tooth is at the rearmost position overlap with each other is a virtual artificial teeth cutting part overlap area,
   the fixing part is arranged within the virtual fixing part overlap area or the virtual artificial teeth cutting part overlap area in the first trajectory or the second trajectory.

A third aspect of the present invention is a production method for dentures (hereinafter, also referred to as the "production method for dentures of the present invention") which is a method of cutting a mill blank for denture plate by a CAD/CAM technique using three-dimensional shape data of an original denture whose shape is adjusted to fit a patient, to produce a denture having an identical or substantially identical shape with the shape of the original denture, wherein the mill blank for dentures of the present invention is used as the mill blank for denture plate.

### {Advantageous Effects of Invention}

According to the mill blank for dentures of the present invention, by using the CAD/CAM technique, it is possible to easily and efficiently replicate a "highly congruent denture" that is produced using a standard denture and obtained by further making the aforesaid adjustments. In addition, the obtained denture is highly aesthetic without any repair marks that degrade aesthetic properties of the "highly congruent denture" (that reflect the adjustment history).

Further, since the mill blank for dentures of the present invention has an excellent characteristic that it has the standard teeth (artificial teeth) arrangement and the arrangement of the front teeth can be finely adjusted while a finish aesthetic appearance of the cervical part after the cutting is kept favorable, not only the aforesaid replication is possible but also dentures well congruent with many patients including dentures for former malocclusion patients can be easily and efficiently produced by replication using the CAD/CAM technique only if the three-dimensional data designed by CAD is available.

Further, as a member of the mill blank for dentures, the cut member for front teeth of the present invention has an excellent characteristic that the aesthetic appearance of its cervical part (or gingival margin) is not impaired when it is cut into the front tooth shape while arranged and fixed on the denture plate cutting part.

### {Brief Description of Drawings}

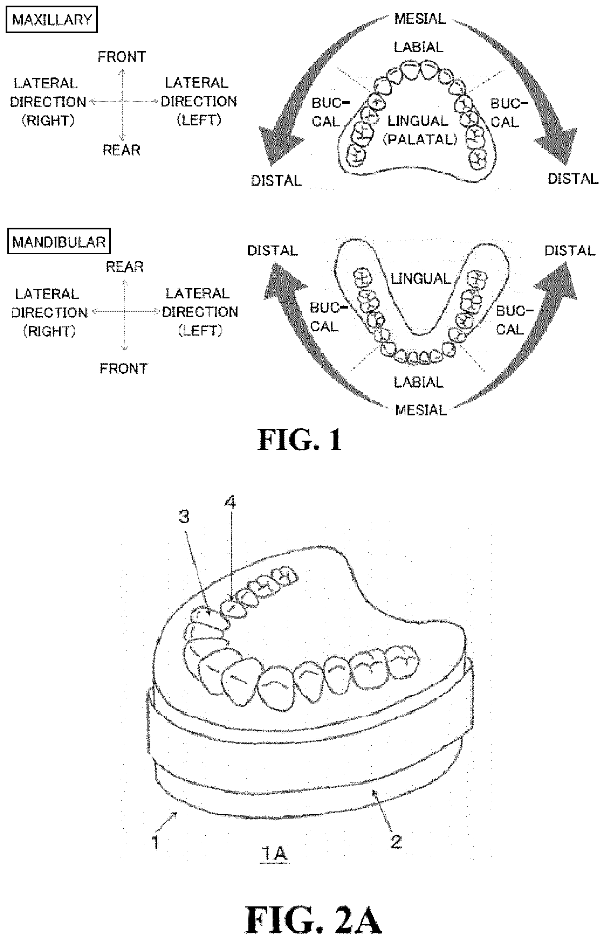

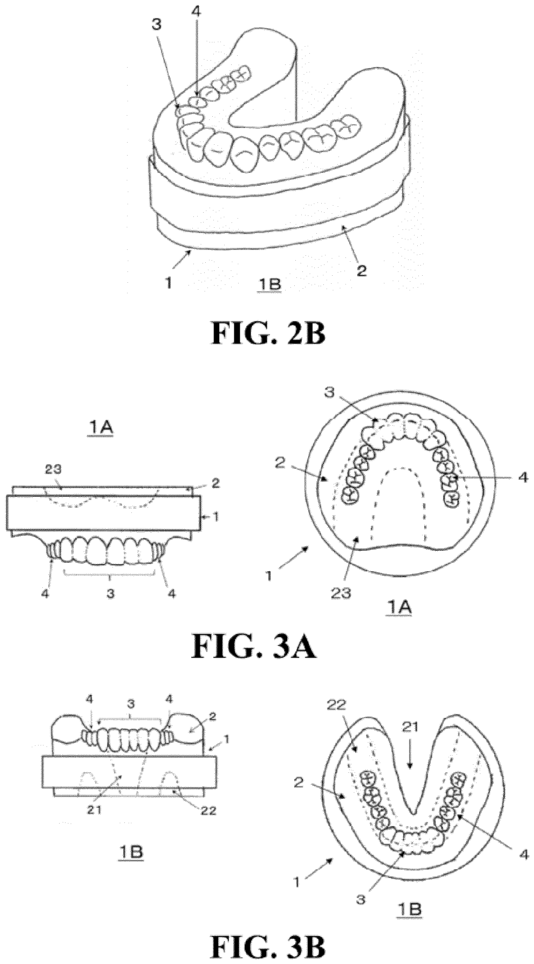

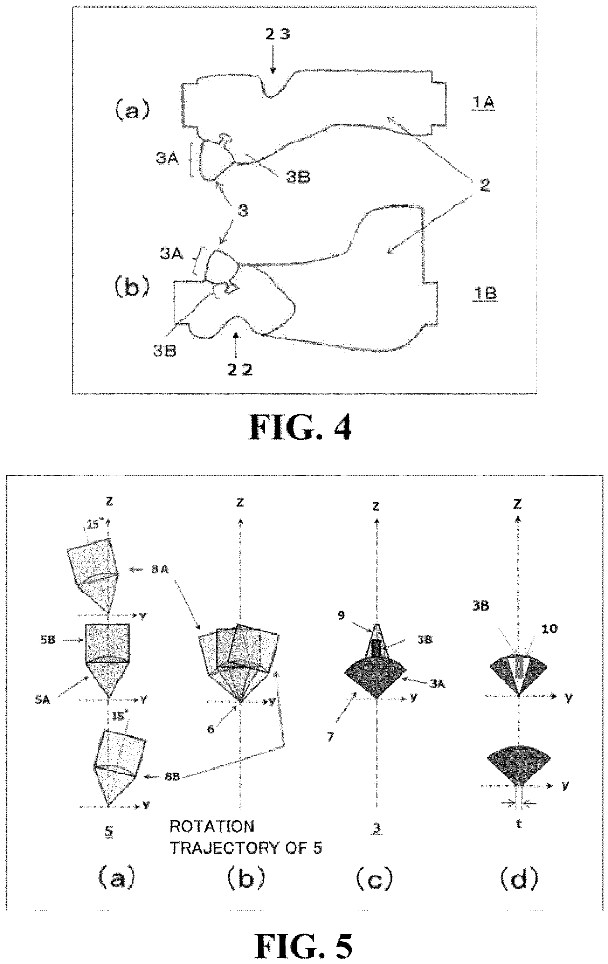

{Fig. 1} This drawing is a view for explaining directions and terms in the present invention regarding a denture and a mill blank for dentures, the upper side illustrating that for maxillary use and the lower side illustrating that for mandibular use.
{Fig. 2A} This drawing is a perspective view illustrating a mill blank for dentures according to an embodiment of the present invention and illustrates a mill blank for maxillary dentures 1A.
{Fig. 2B} This drawing is a perspective view illustrating a mill blank for dentures according to the embodiment of the present invention and illustrates a mill blank for mandibular dentures 1B.
{Fig. 3A} This drawing illustrates a front view (left) of the mill blank for maxillary dentures 1A illustrated in FIG. 2A and its plan view (right) seen from a polished surface side.
{Fig. 3B} This drawing illustrates a front view (left) of the mill blank for mandibular dentures 1B illustrated in FIG. 2B and its plan view (right) seen from a polished surface side.
{Fig. 4} The upper side in this drawing illustrates a vertical section of the mill blank for maxillary dentures 1A illustrated in FIG. 2A, passing through an incisal edge center part of a central incisor, and the lower side in this drawing illustrates a vertical section of the mill blank for mandibular dentures 1B illustrated in FIG. 2B, passing through an incisal edge center part of a central incisor.
{Fig.5} This drawing is an explanatory schematic view of a cut member for front teeth according to an embodiment of the present invention.

### {Description of Embodiments}

First, how and why the present invention has been completed will be simply described. As a method to solve the aforesaid problems, the present inventors came up with the idea of using, as an "original denture", the aforesaid "highly congruent denture" produced using the standard denture and obtained by further making adjustments, and producing a denture in one step by the CAD/CAM technique using three-dimensional shape data of the original denture (replicating the original denture). However, it has been found that a conventionally known method using a mill blank for dentures has a difficulty in achieving this. Specifically, as a method to produce a denture by the CAD/CAM technique, there has been known (1) a method of cutting a denture base mill blank based on individual three-dimensional shape data to produce a denture base part having recesses where to fix artificial teeth, and arranging and fixing the artificial teeth, which are produced by a separate cutting work based on individual three-dimensional shape data, in the recesses of the denture base part to assemble them (see Patent Literature 5). There has also been known (2) a method of cutting a denture base part of a mill blank for dentures in which artificial teeth are arranged on a denture base mill blank (cutting part) so as to have a predetermined arrangement standardized based on a prescribed occlusion principle (see Patent Literature 6). However, the above method (1) requires the separate cutting works for the denture base and the artificial teeth based on the individual three-dimensional shape data, not only necessitating performing the cutting at least twice (if the cutting is done for the artificial teeth one by one, the number of the artificial teeth + one times) but also necessitating an assembly process by joining (bonding), and subtle deviation or the like may occur at the time of the joining. Further, in the aforesaid method (2), the arrangement of the artificial teeth is fixed and thus it cannot cope with the case where this arrangement does not agree with the arrangement in the original denture nor can it cope with a former malocclusion patient individually. Also available is (3) a method of cutting a mill blank for dentures in which a colored material to be a denture base and a colored material to be artificial teeth are connected, into a denture shape (see Patent Literature 7). This method, however, cannot completely reproduce cervical parts (or gingival margins) which are border parts between the teeth and the gums in alveolar parts, necessitating newly developing an additional step of reproducing the cervical parts (or the gingival margins).

Therefore, the present inventors searched for a method to replicate the original denture without a need for separately performing the cutting works of the denture plate and the artificial teeth and without the assembly process or the aforesaid additional step. In the course of this, when CAD/CAM cutting was performed, a structure enabling the reproduction of the cervical part was found, leading to the completion of the present invention.

The mill blank for dentures of the present invention and the cut member for front teeth of the present invention will be hereinafter described in detail. Note that in this specification, the expression "x to y" using numerical values x and y means "not less than x nor more than y" unless otherwise specified. In the case where a unit is added only to the numerical value y in such an expression, this unit is also applied to the numerical value x.

### 1. The mill blank for dentures of the present invention and the production method of the present invention

As illustrated in Fig. 2A to Fig. 4, a mill blank for dentures 1 (1A, 1B) of the present invention has a "denture plate cutting part" 2, "cut members for front teeth" 3, and "molar members" 4. Here, the "denture plate cutting part" is a part that is to constitute a denture plate (including gums) of a denture after cutting, and is made of a denture plate material. As the material of the denture plate, any material used as a material for denture plate in a conventional denture or a standard denture is usable without any restriction. Examples of a suitably usable material include resin materials such as: a poly(meth)acrylate-based resin; a polyolefin-based resin; a polyamide-based resin; a polyester-based resin; a polyether-based resin; a polynitrile-based resin; a polyvinyl-based resin; a cellulose-based resin; a fluorine-based resin; and an imide-based resin. These resin materials are typically used only as the resin materials by themselves, but they may be used with a filler such as an organic filler, an inorganic filler, or an organic-inorganic composite filler added thereto.

Further, the "cut members for front teeth" each have a structure in which an "artificial teeth cutting part" made of an artificial tooth material and a "fixing part" for fixing the artificial teeth cutting part to the denture plate cutting part are connected, and the "molar members" each have a structure in which an "exposed part" made of an artificial tooth material, having a standard molar shape, and requiring substantially no cutting and a "fixing part" for fixing the exposed part to the denture plate cutting part are connected. Then, these "cut members for front teeth" and "molar members" are fixed to the denture plate cutting part while arranged to form standard arrangement patterns of the corresponding teeth.

As the artificial tooth material forming the "artificial teeth cutting parts" and the "exposed parts", any material used as a material for artificial teeth in the conventional dentures or the standard dentures is usable without any restriction. Specifically, a resin material such as a poly(meth)acrylate-based resin, a polyolefin-based resin, a polyamide-based resin, a polyester-based resin, a polyether-based resin, a polynitrile-based resin, a polyvinyl-based resin, a cellulose-based resin, a fluorine-based resin, an imide-based resin, or a silicone-based resin, a composite material, such as a hybrid resin, of any of these resins and an inorganic filler, a ceramic material such as zirconia, porcelain, or the like is usable.

The "fixing part" means a structure for fixing the "artificial teeth cutting part" or the "exposed part" to the denture plate cutting part by a method such as fitting, screwing, or bonding using an adhesive. Specifically, the "fixing part" is a protruding structure or a recessed structure that is used for fixing by being buried in the denture plate material by (mechanical) fitting or insert molding, or by the denture plate material penetrating therein, a male screw or female screw structure for screw-fixing, a protruding part or a recessed part having an adhesive application surface for adhesive fixing. The material of the fixing part may be the same as the artificial tooth material, or may be metal such as stainless steel. It should be noted that what is important is that the fixing is not exposed to the surface after the cutting. To prevent the fixing from exposing to the surface after the cutting, the shape, size, arrangement place, and so on of the process part may be appropriately decided according to a fixing mechanism. For example, if a root-side non-exposed surface (a surface in contact with the "denture plate cutting part") of the "artificial teeth cutting part" is the fixing part and the adhesive is applied thereon for fixing, the fixing part is not exposed after the cutting. Further, in the case of the protruding structure or the recessed groove as well, by making its thickness, width, or the like small and arranging it near the center, it is possible to prevent its exposure to the surface after the cutting.

The mill blank for dentures of the present invention is based on the design idea of reducing the cutting parts and a cutting amount as much as possible while, as for the arrangement of the artificial teeth and the shape of the cervical parts, the arrangement and the shape in the reference denture described in Patent Literature 4 are made most use of as they are. Here, the reference denture described in Patent Literature 4 means a standard denture having the planar shape described in paragraphs 0080 to 0084 and the three-dimensional shape described in paragraph 0103 of the patent literature. The position and angle of the artificial tooth in the standard denture are the position and angle that are decided when the teeth are arranged so as to form an occlusal plane which has a specific planar shape decided based on the oral cavity shapes of a dentate person and an edentulous person, with which the maxillary and mandibular teeth are in close contact, and which is a curve that can be approximated by a plane, and in the mill blank for dentures of the present invention, they are used as a reference when the front teeth are moved and rotated.

Then, in the mill blank for dentures of the present invention, based on the facts in the following (1) and (2) confirmed by the present inventors, the arrangement of artificial teeth in a molar part and the state of their cervical parts are made substantially the same as those in the standard denture, and it is applicable to many cases with as little cutting as possible while keeping an aesthetic appearance of the cervical parts of the front tooth part.
(1) The fact that, regarding the adjustment of teeth in the case where adjustments are made to increase the congruence of a denture produced using the standard denture, adjusting the installation angle of the front tooth part to adjust the maxillo-mandibular positional relation of the front tooth part makes the denture applicable to almost all the cases, and large-scale adjustment of the installation angle, the maxillo-mandibular positional relation, and so on of the molar part is not required, and
(2) the fact that, in a denture congruent with a former malocclusion patient, the arrangement of artificial teeth in a molar part follows the standard arrangement in most cases, but a front tooth part is adjusted according to the maxillo-mandibular positional relation of each individual, and accordingly, the installation angle of the artificial teeth in the front tooth part is greatly different depending on each individual.

Note that the present inventors confirmed the above facts in the course of the development of a standard denture applicable to a former malocclusion patient, and the present inventors have confirmed that a denture produced using the standard denture in which a front tooth adjacent area is separable and the arrangement in this area is finely adjustable is congruent with many former malocclusion patients (Patent Application No. 2021-55921).

Based on these facts, regarding the "cut member for front teeth" forming the front tooth part, the artificial teeth cutting part in the cut member for front teeth is shaped such that the thickness defined as the distance between its labial surface and lingual surface is larger than the thickness of a corresponding standard front tooth, and the width defined as the distance between its mesial surface and distal surface is substantially equal to the width of the standard front tooth. Further, the fixing part in the cut member for front teeth is connected to the cut member for front teeth so as not to be exposed to the surface when the artificial teeth cutting part in the cut member for front teeth and the denture plate cutting part are cut, whereby the aforesaid design idea is achieved.

In short, when these conditions are satisfied, by arranging (the center of) the cut member for front teeth in the mill blank for dentures of the present invention such that it coincides with the position where (the center of) the front tooth part of the standard denture is arranged and forming the cervical part (the gingival margin and the interdental papilla) such that it has a natural state, it is possible to keep the aesthetic appearance of the cervical part after the cutting favorable in the case where the cutting of the artificial teeth cutting part and its cervical part is performed such that the artificial teeth cutting part (of the cut member for front teeth) after the cutting has a predetermined installation angle. Therefore, the use of the mill blank for dentures of the present invention enables the production of many dentures that are standard in at least the arrangement of tooth rows and different in the installation angle of the front tooth part, and makes it possible to replicate the original denture and produce dentures congruent with many former malocclusion patients by performing CAD/CAM cutting once. In the production method for dentures of the present invention that cuts the mill blank for dentures of the present invention using the three-dimensional shape data of the original denture by the CAD/CAM technique to produce a replica of the original denture, it is also possible to produce the replica without impairing the aesthetic appearance of the cervical part (gingival margin) by performing the cutting once.

Note that the production method for dentures of the present invention has no special difference from the conventional CAD/CAM-based production method for dentures except for that data created by CAD based on the shape data obtained as a result of the scanning of the original denture with a scanner or the like is used as the three-dimensional shape data (of an intended object) for cutting and in that the mill blank for dentures of the present invention is used as the mill blank for dentures, and as the CAD/CAM system (including a cutting device), any conventionally used one is usable without any restriction.

The "cut member for front teeth" used in the present invention is not limited as long as it satisfies the aforesaid conditions, but is preferably the cut member for front teeth of the present invention.

Therefore, the cut member for front teeth of the present invention and the mill blank for dentures of the present invention using this member will be hereinafter described in detail with reference to the drawings.

### 2. The cut member for front teeth of the present invention

The cut member for front teeth of the present invention will be described with reference to Fig. 1 to Fig. 5. The cut member for front teeth 3 of the present invention is a cut member for front teeth for a mill blank for dentures having a denture plate cutting part 2 made of a denture plate material, and as illustrated in (c) and (d) of Fig 5, has a structure in which an artificial teeth cutting part 3A made of an artificial tooth material and a fixing part 3B for fixing the artificial teeth cutting part to the denture plate cutting part are connected.

Then, the shape of the artificial teeth cutting part as represented using a specific coordinate system based on the shape of a denture artificial tooth (a front-tooth artificial tooth having a standard shape, which is obtained as a result of the cutting of the cut member for front teeth. Hereinafter, also referred to as an "intended-shape front tooth") 5 having a standard shape of a front tooth corresponding to the cut member for front teeth satisfies the following conditions 1 and 2.

Note that "based on the shape of the intended-shape front tooth 5" here means that when the shape is expressed, in the intended-shape tooth 5, an exposed part not covered with a gum is defined as a virtual artificial teeth cutting part 5A and a part covered with the gum is defined as a virtual fixing part 5B. Further, the specific coordinate system means a coordinate system whose x-axis is a direction parallel to a part corresponding to an incisal edge (incisal margin) in the virtual artificial teeth cutting part 5A, whose y-axis is a front-rear direction perpendicular to the x-axis, and whose z-axis is a vertical direction perpendicular to the x-axis and the y-axis, where the front side is a labial surface side, the rear side is a lingual surface side, a direction perpendicular to the front-rear direction and passing through a mesial surface and a distal surface is a lateral direction, and a direction perpendicular to the front-rear direction and the lateral direction is the vertical direction.

Condition 1: The condition that the shape of the artificial teeth cutting part 3A is identical or substantially identical with the shape of a trajectory (this trajectory is referred to also as a first trajectory 7) that the virtual artificial teeth cutting part 5A makes when the denture artificial tooth (intended-shape front tooth) 5 is arranged with its incisal edge center part coinciding with the origin and is rotated around the x-axis being the rotation axis by a predetermined angle within a range of 5 to 25° in the front direction and by a predetermined angle within a range of 5 to 25° in the rear direction, or identical or substantially identical with the shape of a trajectory (this trajectory is referred to also as a second trajectory) that is made when the first trajectory 7 is further moved forward and rearward by a predetermined length within a range of 2 mm or less.

Condition 2: The condition that, when it is defined that, in the first trajectory 7 or the second trajectory, an area where an area occupied by the virtual fixing part 5B in a state where the denture artificial tooth (intended-shape front tooth 5) is at a foremost position 8A and an area occupied by the virtual fixing part 5B in a state where the denture artificial tooth (intended-shape tooth 5) is at a rearmost position 8B overlap with each other is a virtual fixing part overlap area 9, and an area where an area occupied by the virtual artificial teeth cutting part 5A in the state where the denture artificial tooth (intended-shape front tooth 5) is at the foremost position 8A and an area occupied by the virtual artificial teeth cutting part 5A in the state where the denture artificial tooth (intended-shape front tooth 5) is at the rearmost position 8B overlap with each other is a virtual artificial teeth cutting part overlap area 10, the fixing part 3B in the cut member for front teeth 3 is arranged within the virtual fixing part overlap area 9 or the virtual artificial teeth cutting part overlap area 10 in the first trajectory or the second trajectory.

When the condition 1 is satisfied, the artificial teeth cutting part 3A of the cut member for front teeth 3 has a shape whose thickness defined as the distance between its labial surface and lingual surface is larger than the thickness of the corresponding standard front tooth and whose width defined as the distance between its mesial surface and distal surface is substantially equal to the width of the standard front tooth. As described above, for the fitting adjustment in the original denture, in most cases, it suffices if the installation angle of the front tooth part is adjusted, and therefore, by satisfying the condition 1, it is possible to cope with many patients while reducing the cutting amount. Further, by satisfying the condition 2, it is possible to prevent the fixing part 3B from exposing to the surface when the artificial teeth cutting part 3A and the denture plate cutting part are cut as the mill blank for dentures of the present invention.

First, the aforesaid coordinate system will be described using Fig. 1 and Fig. 5. Fig. 1 illustrates the names of the areas or directions in typical maxillary and mandibular dentures, three teeth on each of the left and right on the mesial side (a central incisor, a lateral incisor, and a cuspid), totally six teeth, form the front tooth part, and four teeth on each of the left and right on the distal side (a first premolar, a second premolar, a first molar, and a second molar), totally eight teeth, form a molar part. Further, regarding surfaces forming a front tooth, when it is seen from its tip (incisal edge or incisal margin), a front surface is called a labial surface, a rear surface is called a lingual surface, a side surface in the mesial direction is called a mesial surface, and a surface in the distal direction is called a distal surface. Then, the front-rear direction and the lateral direction in this specification are as illustrated in Fig. 1. Regarding the coordinate system, in the virtual artificial teeth cutting part 5A of the intended-shape front tooth 5, a direction parallel to a part corresponding to the incisal edge is an x-axis, a front-rear direction perpendicular to the x-axis is a y-axis, and a vertical direction perpendicular to the x-axis and the y-axis is a z-axis. That is, the y-axis and the z-axis are as illustrated in Fig. 5 and the x-axis is an axis perpendicular to the sheet and passing through the intersection of the y-axis and the z-axis. For example, the x-axis of the intended-shape front tooth 5 corresponding to the central incisor of the maxillary denture coincides with a lateral-direction axis passing through the incisal edge of the central incisor, its y-axis coincides with a front-rear-direction axis passing through the incisal edge center 6, and its z-axis coincides with a vertical-direction axis passing through the incisal edge center 6. Further, such a coordinate system is decided such that the x axes of the cut members for front teeth 3 (or the intended-shape front teeth 5) are parallel to the parts corresponding to the incisal edges of the respective teeth, and therefore, the y axes of the lateral incisors and the cuspids slightly incline from the accurate front-rear direction and are the normal directions to the labial surfaces of the teeth.

Next, the aforesaid conditions 1 and 2 will be described with reference to Fig. 5. Fig. 5 schematically illustrates a cross section taken along a yz plane when the incisal edge center 6 of the intended-shape front tooth 5 is arranged at the origin of the xyz coordinate axes (x = 0), where the virtual fixing part 5B (its cross section) is represented by the square, and the virtual artificial teeth cutting part 5A (its cross section) is represented by the inverted triangle.

In (a) of Fig. 5, the middle drawing illustrates a state where the intended-shape front tooth 5 is set vertically (reference state), the upper drawing illustrates a state where it is rotated in the front direction by 15° around the x-axis being the rotation axis, and the lower drawing illustrates a state where it is rotated in the rear direction by 15° around the x-axis being the rotation axis.

(b) of Fig. 5 is a view where these three drawings are superimposed and illustrates the shapes of the trajectories of the virtual artificial teeth cutting part 5A and the virtual fixing part 5B. The trajectory of the virtual artificial teeth cutting part 5A in (b) of Fig. 5 is the first trajectory 7.

Further, (c) of Fig. 5 is a view illustrating the shape of the first trajectory 7 (lower fan-shaped part) of the virtual artificial teeth cutting part 5A in (b), and the shape of the "virtual fixing part overlap area" 9 (upper trapezoidal part) which is the area where the area occupied by the virtual fixing part 5B in the state where the denture artificial tooth (intended-shape front tooth 5) is at the foremost position 8A and the area occupied by the virtual fixing part 5B in the state where the denture artificial tooth (intended-shape front tooth 5) is at the rearmost position 8B overlap with each other. The shape of the first trajectory 7 of the virtual artificial teeth cutting part 5Ais the shape of the artificial teeth cutting part 3A in the cut member for front teeth 3 of the present invention. That is, with the arrangement where the intended-shape front tooth 5 is vertically set being a reference, the labial surface of the virtual artificial teeth cutting part 5A is inclined forward by 15°, its lingual surface is inclined rearward by 15°, and its yz cross section has the fan shape illustrated in (c) of Fig. 5. Further, if the fixing part 3B is a protruding member buried in the denture plate cutting part 2 like an anchor as illustrated in (c) of Fig. 5, the fixing part 3B is arranged within the virtual fixing part overlap area 9 (the upper trapezoidal part). Consequently, in the case illustrated in the drawing, even if the intended-shape front tooth 5 is formed by the cutting such that it is arranged while inclined from the reference position by ±15°, the fixing part 3B is not exposed to the surface. Further, since, in the shape of the trajectory of the virtual fixing part 5B, a part other than the virtual fixing part overlap area 9 can be formed of the denture plate cutting part, the cervical part can be kept natural even after the cutting.

The upper drawing in (d) of Fig. 5 is an explanatory view of the arrangement state of the fixing part 3B in the case where the fixing part 3B has, for example, a male screw structure or a recessed structure such as a hole where to fit the denture plate material forming the denture plate cutting part, and in this case, the fixing part 3B is formed within the "virtual artificial teeth cutting part overlap area" 10 (the narrow fan-shaped part near the center line in the drawing) which is the area where the area occupied by the virtual artificial teeth cutting part 5A in the state where the denture artificial tooth (intended-shape front tooth 5) is at the foremost position 8A and the area occupied by the virtual artificial teeth cutting part 5A in the state where the denture artificial tooth (intended-shape front tooth 5) is at the rearmost position 8B overlap with each other. In this case as well, it is possible to keep the cervical part natural even after the cutting.

Hitherto, the case where the angle of the rotation in the front-rear direction (y-axis direction) with the x-axis being the rotation axis is ±15° from the reference state is described as an example with reference to Fig. 5, but the rotation angle may be a predetermined angle within a 5 to 25° range in the front direction and a predetermined angle within a 5 to 25° range in the rear direction. The rotation angle is preferably a predetermined angle within a 10 to 17° range in the front direction and a predetermined angle within a 10 to 17° range in the rear direction from a viewpoint of enabling the production of a denture congruent with many patients except for an extreme case and enabling the overlap area not to greatly restrict the shape of a holding part.

Further, for the reason that the adjustment for preventing the upper and lower teeth from coming into contact and from being spaced can be easily made, the shape of the artificial teeth cutting part 3A may be identical or substantially identical with the shape of a trajectory (second trajectory) that is made when the first trajectory 7 is moved forward and rearward by a predetermined length within a range of 2 mm or less (within ±2 mm in the Y-axis direction), preferably by a predetermined length within a range of 1 mm or less (within ±1 mm in the Y-axis direction). For example, in the case where it is moved by t along the y-axis, the cross section along the yz plane is the shape illustrated in the lower drawing in (d) of the drawing, and the thickness of the artificial teeth cutting part 3A increases by t.

The cut member for front teeth 3 of the present invention may be one corresponding to each of the left and right central incisors, lateral incisors, and cuspids, or may be one in which those corresponding to adjacent two or more teeth are connected and integrated. In view of efficiency in producing the mill blank for dentures of the present invention using the cut member for front teeth 3 of the present invention, the shape in which the aforesaid six teeth are integrated is preferable.

### 3. The mill blank for dentures of the present invention using the cut member for front teeth of the present invention

Fig. 2A, Fig. 2B, Fig. 3A, Fig. 3B, and Fig. 4 illustrate the mill blank for dentures 1 of the present invention using a typical cut member for front teeth 3 of the present invention. Fig. 2A, Fig. 3A, and the upper side (a) of Fig. 4 illustrate the mill blank for maxillary dentures 1A, and Fig. 2B, Fig. 3B, and the lower side (b) of Fig. 4 illustrate the mill blank for mandibular dentures 1B. Further, Fig. 2A and Fig. 2B illustrate perspective views, Fig. 3A and Fig. 3B illustrate front views and plan views (seen from a polished surface side), and Fig. 4 illustrates vertical sections passing through the incisal edge centers 6 of the central incisors.

The mill blank for dentures 1 (1A, 1B) has the "denture plate cutting part" 2, the "cut members for front teeth" 3, and the "molar members" 4.

The basic shape of the "denture plate cutting part" 2 is substantially a disk shape, and the shape of the mill blank for mandibular dentures 1B, similarly to the shape of a typical mill blank for mandibular dentures, is a U-shape (or a horseshoe shape) with its part on which the tongue is to be present when it is worn (21 in Fig. 3) being lacking. This is intended to do away with useless cutting to reduce the material and shorten the cutting time by eliminating a part that necessarily has to be cut at the time of the cutting in the case where the lacking part is not provided. For the same reason, in each of the mill blank for maxillary dentures 1A and the mill blank for mandibular dentures 1B, it is preferable to form a recessed part or a lacking part for cutting amount reduction in a part corresponding to a mucosal surface side (artificial tooth arrangement surface side: opposite the polished surface side), in particular, in a part corresponding to an alveolar ridge. The parts denoted by 22 and 23 in Fig. 3A and Fig. 3B correspond to the recessed parts. The size and thickness of the substantial disk shape as the basic shape, the shape and size of the lacking part (for forming the U-shape) in the mill blank for mandibular dentures 1B, and the shape and size of the recessed part or the lacking part are decided according to the dentition such that the largest assumable denture can be cut out.

On the other hand, the surface on the polished surface side is formed such that the alveolar parts including at least the cervical parts substantially reproduce the alveolar parts in the reference denture described in Patent Literature 4 in the state where the "cut members for front teeth" 3 and the "molar members" 4 are fixed. Here, substantially means that (a) the fixing state of the molar members 4 and their alveolar parts are the same as those in the aforesaid reference denture and thus the polishing is not necessary or even if the polishing is performed, a polishing amount is extremely small, and (b) as for the alveolar parts of the "cut members for front teeth" 3, due to the shape of their "artificial teeth cutting parts" 3A, their state is (naturally) slightly different from the state of the alveolar parts of the reference denture, but they are in the state of being formed such that the cervical parts including the interdental papillae appear natural (without giving any strange impression).

The "denture plate cutting part" 2 is preferably provided with a mechanism for fixing the mill blank for dentures of the present invention to a cutting machine. As such a mechanism, one adopted in a conventional dental mill blank is adoptable without any restriction. In the form illustrated in the drawings, as such a mechanism, a "step for fixing" is provided on a side surface of the mill blank for dentures, but instead of adopting such a form, a member for assisting the fixing may be attached. Further, for easier positioning at the time of the fixing, irregularities, marks, or the like may be provided in the "denture plate cutting part" 2.

As the "cut member for front teeth" 3 in the mill blank for dentures 1 (1A, 1B), the cut member for front teeth of the present invention is used as follows. Specifically, used is one in which the "artificial teeth cutting parts" 3A respectively corresponding to the teeth (intended-shape front teeth 5) which are the left and right central incisors, lateral incisors, and cuspids are connected to be integrated at their proximate parts or near them like what is called a coupling crown. At the time of the integration, gaps where to form the interdental papillae are left at the roots of the "cut members for front teeth" 3A corresponding to the respective teeth (intended-shape front teeth 5). In the "cut members for front teeth" 3, the shape of the "artificial teeth cutting parts" 3A corresponding to the integrated teeth (intended-shape teeth 5) are as described above, and in the form illustrated in the drawings, their shape in the upper jaw is the shape of the (first) trajectory that is made when the angle of the rotation in the front direction and the angle of the rotation in the rear direction around the x-axis being the rotation axis are 10° and 10°, and their shape in the lower jaw is the shape of the trajectory (second trajectory) that is made when the (first) trajectory 7 rotated in the front direction by 15° and in the rear direction by 15° around the x-axis being the rotation axis is moved forward and rearward by 1 mm length. Further, the "fixing part" 3B is formed of a protruding member functioning as an anchor as illustrated in Fig. 4 and is buried in the denture plate material by insert molding. Since the artificial teeth cutting parts are connected to be integrated, the fixing parts 3B do not necessarily have to be connected to all the artificial teeth cutting parts, and the connection of some of them may be omitted within a range not giving adverse effects to the fixing.

The "cut members for front teeth" 3 are fixed to the "denture plate cutting part" 2 while arranged so as to form a standard arrangement pattern of the corresponding teeth (that is, the left and right central incisors, lateral incisors, and cuspids) in the upper jaw or the lower jaw. Here, "form the standard arrangement pattern" specifically means that the cut members for front teeth 3 (their centers) are arranged to coincide with the (reference) positions of the corresponding front teeth (their centers), with the arrangement positions of the front teeth (their centers) in the reference denture described in Patent Literature 4 serving as the reference.

In the mill blank for dentures 1 (1A, 1B), the "molar members" 4 respectively corresponding to the left and right first premolars, second premolars, first molars, and second molars are arranged so as to form the standard arrangement pattern of the maxillary or mandibular teeth. That is, they are arranged so as to coincide with the reference positions where the molars in the reference denture described in Patent Literature 4 are arranged.

As already described, the design idea of the mill blank for dentures of the present invention is to "reduce the cutting parts and the cutting amount as much as possible while, as for the artificial tooth arrangement and the shape of the cervical part, making most use of the arrangement and shape in the reference denture described in Patent Literature 4 as they are". However, since the standard denture is usually prepared in several sizes (for example, size S, size M, size L, and so on) so as to be adaptable to the oral cavity sizes of standard patients, the mill blank for dentures of the present invention is also preferably prepared in various sizes corresponding to these sizes. That is, similarly to the standard denture serving as the reference of the arrangement of the "cut members for front teeth" 3 and the "molar members" 4, those where variously sized ones are used and arranged are preferably prepared.

The production method for the mill blank for dentures 1 (1A, 1B) is not limited, and any of various methods such as injection molding, compression molding, and stereolithography using a 3D printer can be employed. In view of efficient mass production, it is preferable to employ what is called an insert molding method that arranges the "cut members for front teeth" 3 and the "molar members" 4 which are prepared in advance, at predetermined positions in a mold having a predetermined shape and fills the mold with a thermally molten (thermally softened) resin serving as the denture plate material.

Hitherto, the mill blank for dentures of the present invention using the cut member for front teeth of the present invention has been described, but the cut member for front teeth of the present invention is not limited to this. For example, malocclusion occurs mainly in the case where the maxillo-mandibular positional relation is deviated due to the poor growth or the like of the jaws, and at the time of denture production, the mandibular front teeth are often inclined in the front-rear direction according to the maxillo-mandibular positional relation, but there is scarcely a case where the inclination of the maxillary front teeth is necessary, and the angle adjustment of the maxillary front teeth is not always necessary. Because of this, instead of using the cut member for front teeth of the present invention, the mill blank for maxillary dentures of the present invention may use a cut member for front teeth, with the rotation angle for the first trajectory of the virtual artificial teeth cutting part being set to less than 5° in the front direction and the rear direction.

Further, the mill blank for dentures of the present invention including the mill blank for dentures 1 illustrated in the drawings, similarly to the conventional mill blank for dentures, is attached to a cutting machine in a CAD/CAM system and is cut based on three-dimensional shape data of the original denture or three-dimensional shape data of a denture created by CAD (Computer Aided Design), and thereafter is subjected to processing such as finish polishing as required, whereby an intended denture can be produced.

### {Reference Signs List}

1...mill blank for dentures of present invention
1A...mill blank for maxillary dentures
1B...mill blank for mandibular dentures
2...denture plate cutting part
21-23...recessed part or lacking part for cutting amount reduction
3...cut member for front teeth
3A... artificial teeth cutting part
3B...fixing part
4...molar member
5... denture artificial tooth having standard shape of front tooth (intended-shape front tooth)
5A...virtual artificial teeth cutting part
5B...virtual fixing part
6...incisal edge center
7...first trajectory
8A...foremost position
8B... rearmost position
9...virtual fixing part overlap area
10...virtual artificial teeth cutting part overlap area

## Claims

1. A mill blank for dentures comprising:
a denture plate cutting part made of a denture plate material;
cut members for front teeth each having a structure in which an artificial teeth cutting part made of an artificial tooth material and a fixing part for fixing the artificial teeth cutting part to the denture plate cutting part are connected; and
molar members each having a structure in which an exposed part made of an artificial tooth material, having a standard molar shape, and requiring substantially no cutting and a fixing part for fixing the exposed part to the denture plate cutting part are connected,
the cut members for front teeth and the molar members being fixed to the denture plate cutting part while arranged to form standard arrangement patterns of respective corresponding teeth,
wherein the artificial teeth cutting parts in the cut members for front teeth each have a shape such that a thickness defined as a distance between a labial surface and a lingual surface of the artificial teeth cutting part is larger than a thickness of a corresponding standard front tooth, and a width defined as a distance between a mesial surface and a distal surface of the artificial teeth cutting part is substantially equal to a width of the standard tooth, and
wherein the fixing parts in the cut members for front teeth are each connected to the cut member for front teeth so as not to be exposed to a surface when the artificial teeth cutting part in the cut member for front teeth and the denture plate cutting part are cut.

2. The mill blank for dentures according to claim 1,
the mill blank for dentures being a mill blank for maxillary or mandibular dentures in which the cut members for front teeth respectively corresponding to left and right central incisors, lateral incisors, and cuspids and the molar members respectively corresponding to left and right first premolars, second premolars, first molars, and second molars are fixed to the denture plate cutting part while arranged to form a standard arrangement pattern of maxillary or mandibular teeth.

3. The mill blank for dentures according to claim 1,
wherein, in the denture plate cutting part, areas of cervical parts in alveolar parts in which the molar members are fixed require substantially no cutting, and in the denture plate cutting part, interdental papillae are formed in alveolar parts in which the cut members for front teeth are fixed.

4. The mill blank for dentures according to claim 1,
wherein the denture plate cutting part has a substantial disk shape having a recessed part or a lacking part for cutting amount reduction.

5. A cut member for front teeth for a mill blank for dentures having a denture plate cutting part made of a denture plate material,
the cut member for front teeth having a structure in which an artificial teeth cutting part made of an artificial tooth material and a fixing part for fixing the artificial teeth cutting part to the denture plate cutting part are connected,
wherein, in the cut member for front teeth, the artificial teeth cutting part satisfies the following condition 1, and the fixing part satisfies the following condition 2:
[Condition 1]
when it is defined that, in a denture artificial tooth having a standard shape of a front tooth corresponding to the cut member for front teeth, an exposed part not covered with a gum is a virtual artificial teeth cutting part, a part covered with the gum is a virtual fixing part, a labial surface side is a front side, a lingual surface side is a rear side, a direction perpendicular to a front-rear direction and passing through a mesial surface and a distal surface is a lateral direction, and a direction perpendicular to the front-rear direction and the lateral direction is a vertical direction,
a shape of the artificial teeth cutting part as represented using a coordinate system whose x-axis is a direction parallel to a part corresponding to an incisal edge in the virtual artificial teeth cutting part, whose y-axis is a front-rear direction perpendicular to the x-axis, and whose z-axis is a vertical direction perpendicular to the x-axis and the y-axis is identical or substantially identical with a shape of a first trajectory that the virtual artificial teeth cutting part makes when the denture artificial tooth is arranged with an incisal edge center part thereof coinciding with an origin and is rotated around the x-axis being a rotation axis by a predetermined angle within a range of 5 to 25° in the front direction and by a predetermined angle within a range of 5 to 25° in the rear direction, or identical or substantially identical with a shape of a second trajectory that is made when the first trajectory is further moved forward and rearward by a predetermined length within a range of 2 mm or less; and
[Condition 2]
when it is defined that, in the first trajectory or the second trajectory, an area where an area occupied by the virtual fixing part in a state where the denture artificial tooth is at a foremost position and an area occupied by the virtual fixing part in a state where the denture artificial tooth is at a rearmost position overlap with each other is a virtual fixing part overlap area, and an area where an area occupied by the virtual artificial teeth cutting part in the state where the denture artificial tooth is at the foremost position and an area occupied by the virtual artificial teeth cutting part in the state where the denture artificial tooth is at the rearmost position overlap with each other is a virtual artificial teeth cutting part overlap area,
the fixing part is arranged within the virtual fixing part overlap area or the virtual artificial teeth cutting part overlap area in the first trajectory or the second trajectory.

6. The mill blank for dentures according to claim 1, wherein the cut member for front teeth is the cut member for front teeth according to claim 5.

7. A production method for dentures,
the production method for dentures being a method of cutting a mill blank for denture plate by a CAD/CAM technique using three-dimensional shape data of an original denture whose shape is adjusted to fit a patient, to produce a denture having an identical or substantially identical shape with the shape of the original denture, wherein the mill blank for dentures according to claim 1 is used as the mill blank for denture plate.
